# EUROPÄISCHE PATENTANMELDUNG

(11) **EP 2 386 920 A1**
(43) Veröffentlichungstag der Anmeldung: **16.11.2011**
(21) Anmeldenummer: 10162128.2
(22) Anmeldetag: 06.05.2010
(51) Int. Cl.: G05B 19/042, G05B 19/418, G05B 23/02

(54) **Verfahren zum Auswerten von Diagnosemeldungen**

(71) Anmelder: SIEMENS AKTIENGESELLSCHAFT, 80333 München (DE)
(72) Erfinder: Steindl, Günter, 92284 Poppenricht (DE)

(57) **Zusammenfassung**

Die Erfindung betrifft ein Verfahren zum Auswerten von Diagnosemeldungen, welche durch ein Feldgerät (11, 12, 13) in einer Automatisierungsanlage (10) generiert werden, wobei in einem ersten Schritt (1) ein Inbetriebnahmeprogramm (20) mit dem Feldgerät (11, 12, 13) kommuniziert, wobei für das Feldgerät (11, 12, 13) eine für die Art des Feldgerätes (11, 12, 13) und den Einsatzzweck spezifische Diagnoseereignisliste (11a, 12a, 13a) bereitgestellt wird, und wobei in einem zweiten Schritt (2) die Diagnoseereignisliste (11a, 12a, 13a) dem Inbetriebnahmeprogramm (20) übermittelt wird, und in einem dritten Schritt (3) ein Anlagenbetreiber die Diagnoseereignisliste (11a, 12a, 13a) überprüft und entsprechend der Anwendung des Feldgerätes (11, 12, 13) in der Automatisierungsanlage (10) eine Auswahl (M1) an Diagnoseereignissen aus der Diagnoseereignisliste (11a, 12a, 13a) auswählt, wobei in einem vierten Schritt (4) die Auswahl (M1) als eine Auswahlliste (11b, 12b, 13b) durch das Inbetriebnahmeprogramm (20) in das Feldgerät (11, 12, 13) geladen wird.

## Beschreibung

Die Erfindung betrifft ein Verfahren zum Auswerten von Diagnosemeldungen, welche durch ein Feldgerät in einer Automatisierungsanlage generiert werden, wobei in einem ersten Schritt ein Inbetriebnahmeprogramm mit dem Feldgerät kommuniziert.

In der Prozessautomatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte, etc., die als Sensoren die entsprechenden Prozessvariablen, wie Füllstand, Durchfluss, Druck- bzw. Temperatur, erfassen.

Zur Beeinflussung von Prozessvariablen dienen Aktoren, wie z.B. Ventile, die den Durchfluss einer Flüssigkeit in einem Rohrleitungsabschnitt oder als Pumpen den Füllstand in einem Behälter steuern.

In der Regel sind Feldgeräte in modernen Automatisierungsanlagen über Feldbussysteme, wie beispielsweise einem Profibus oder einem Profinet, mit übergeordneten Einheiten, wie z.B. Leitsystemen oder Steuereinheiten, verbunden.

In zunehmenden Maße werden in der Automatisierungstechnik von den genannten Feldgeräten immer mehr Prozessereignisse generiert, um den Zustand der Anlage möglichst lückenlos zu dokumentieren und eine Fehlersuche zu beschleunigen, um eventuelle Stillstandszeiten der Automatisierungsanlage zu minimieren.

Nach der DE 10 2004 055 814 A1 sind Feldgeräte und ein Verfahren zur Inbetriebnahme eines Feldgerätes der Prozessautomatisierungstechnik mit einem Bedienprogramm bekannt.

Bei den bekannten Automatisierungsanlagen und Feldgeräten ist es von Nachteil, dass für die Prozessereignisse eine zentrale Klassifizierungseinheit in die Anlage eingebaut werden muss. Da dieses Vorgehen fehleranfällig bzw. kostenintensiv ist, wird nach einer Lösung gesucht, auf eine Klassifizierungseinheit zu verzichten.

Die Aufgabe wird gelöst durch ein Verfahren zum Auswerten von Diagnosemeldungen, welche durch ein Feldgerät in einer Automatisierungsanlage generiert werden, wobei in einem ersten Schritt ein Inbetriebnahmeprogramm mit dem Feldbus kommuniziert, und für das Feldgerät eine für die Art des Feldgerätes und den Einsatzzweck spezifische Diagnoseereignisliste bereitgestellt wird, und wobei in einem zweiten Schritt die Diagnoseereignisliste dem Inbetriebnahmeprogramm übermittelt wird, und in einem dritten Schritt ein Anlagenbetreiber die Diagnoseereignisliste überprüft und entsprechend der Anwendung des Feldgerätes in der Automatisierungsanlage eine Auswahl an Diagnoseereignissen aus der Diagnoseereignisliste auswählt, wobei in einem vierten Schritt die Auswahl als eine Auswahlliste durch das Inbetriebnahmeprogramm in das Feldgerät geladen wird. Ausgehend davon, dass ein Feldgerät eine Prozessereignisquelle ist, liefert jede Prozessereignisquelle eine Liste ihrer Prozessereignisse. Diese Ereignisse werden im Rahmen einer Projektierung der Anlage entsprechend ihrer Bedeutung klassifiziert. Dadurch liefert jede Prozessereignisquelle von Anfang an klassifizierte Ereignisse, die auf der kompletten Strecke zum Meldesystem entsprechend priorisiert werden. Eine zentrale Klassifizierungseinheit wird damit überflüssig.

In vorteilhafter Weise werden die Diagnoseereignisse der Auswahl einer Fehlerklasse zugeordnet. Dabei werden die ausgewählten Diagnoseereignisse einer ersten Menge und die nicht ausgewählten Diagnoseereignisse einer zweiten Menge zugeordnet, wobei die Diagnoseereignisse der zweiten Menge einer Restklasse zugeordnet werden. Das Zuordnen der Restklasse dient der Absicherung, dass auch wenn der Anlagenbetreiber in seiner Auswahl eine entsprechende Meldung bzw. ein Diagnoseereignis nicht selektiert hat und dieses dennoch auftritt, dieses auf jeden Fall auch einer spezifischen Klasse, nämlich der Restklasse zugeordnet ist. So kann ein Inbetriebnehmer oder Anlagenbetreiber später auch feststellen, wenn nicht vorgesehene Ereignisse eintreten.

Dabei werden nach einer Generierung eines Diagnoseereignisses auf dem Feldgerät neben dem Ereignis auch die Fehlerklasse oder die Restklasse gemeldet. Klassifizierte Diagnoseereignisse stehen somit schon direkt nach dem Absenden aus dem Feldgerät auf einem Feldbus bzw. direkt in der Fertigungsautomatisierung zur Verfügung und müssen nicht erst über dem nach dem Stand der Technik bekannten Klassifizierungsserver bzw. der Klassifizierungseinheit generiert werden. Ein als ein Meldeserver ausgelegter Klassifizierungsserver mit seiner Projektierung kann daher deutlich schlanker ausfallen oder unter Umständen ganz entfallen.

Das Verfahren wird vorteilhaft weitergebildet, in dem das Feldgerät das Diagnoseereignis und die zugeordnete Klasse an eine Auswerteeinheit, insbesondere an eine Bedien- und Beobachtungsstation, übermittelt. Dies hat den technischen Effekt, dass jede Bedien- und Beobachtungsstation bereits von der eigentlichen Ereignisquelle die "richtige" Klassifizierung des Ereignisses bzw. der Meldung erhält und muss nicht zusätzlich mit einem zentralen Server kommunizieren.

Weiterhin ist es vorteilhaft, in der Auswerteeinheit die Fehlerklasse oder die Restklasse dazu zu nutzen, dass die Diagnoseereignisse selektiv entsprechend ihrer Klasse ausgewertet und/oder visualisiert werden. Eine Bedien- und Beobachtungsstation ist in diesem Fall eine Senke für die Diagnoseereignisse und erhält somit die aufgetretenen Prozessereignisse. Werden diese Prozessereignisse auf der Bedien- und Beobachtungsstation visualisiert, so kann die Visualisierungssoftware mit einem einfachen Filter auf Basis der Fehlerklassen einer Auswertung der Diagnoseereignisse vornehmen, und somit die "wichtigen" von den "unwichtigen" Ereignissen trennen.

Das genannte Verfahren wird vorteilhafter Weise in einer Automatisierungsanlage mit einer Steuerungseinheit und mehreren Ein-/Ausgabengeräten als Feldgeräte und zumindest einer Bedien- und Beobachtungsstation durchgeführt.

In einer weiteren verfahrensgemäßen Ausgestaltung wird die Auswahlliste zusätzlich in der Steuerungseinheit abgelegt und bei einem Neuanlauf oder nach einem Austausch des Feldgeräts, die Auswahlliste als eine Konfigurationsdatei von der Steuerungseinheit auf das Feldgerät geladen. Das Ergebnis der vorherigen Auswahlschritte, um zu der Auswahl bzw. zu der Auswahlliste zu gelangen, kann also nun in einer maschinenlesbaren Form von einer vorhandenen Steuerungseinheit, beispielsweise einer speicherprogrammierbaren Steuerung in das Feldgerät geladen werden. Dies ist bei einer sogenannten Hochlauf- oder bei einer Anlaufparametrierung sehr nützlich. Mit dem Abspeichern der Auswahllisten auf der Steuerungseinheit wird ein Nachparametriermechanismus durch die Steuerungseinheit bereitgestellt. Auch bei einem Austausch des Feldgeräts, beispielsweise im Fehlerfall, ist sichergestellt, dass die zuvor selektierten Konfigurationsinformationen wieder durch die Steuerungseinheit in das ausgetauschte Feldgerät geladen werden.

Vorteilhafterweise wird das Inbetriebnahmeprogramm neben einem Visualisierungsprogramm auf einem HMI-Gerät ausgeführt.

Weiterhin ist es denkbar, wenn eine Vielzahl von Fehlerklassen gebildet wird, dass diese Fehlerklassen in eine Abstufung je nach Schweregrad der Diagnoseereignisse priorisiert werden. Die Diagnoseereignisse bzw. die daraus resultierenden Informationen der Feldgeräte können somit in hierarchischen Strukturen verknüpft und daraus wiederum erneut weitere Sammelmeldungen erzeugt werden. Auf diese neu erzeugten Sammelmeldungen ließe sich wieder das eingangs genannte Verfahren von Schritt 2 bis 4 anwenden.

Ein Ausführungsbeispiel wird in der Zeichnung näher beschrieben. Es zeigen die
- FIG 1: eine Automatisierungsanlage mit Feldgeräten,
- FIG 2: eine Auflistung der Diagnoseereignisliste mit anschließender Klassifizierung und
- FIG 3: die verfahrensgemäßen Schritte.

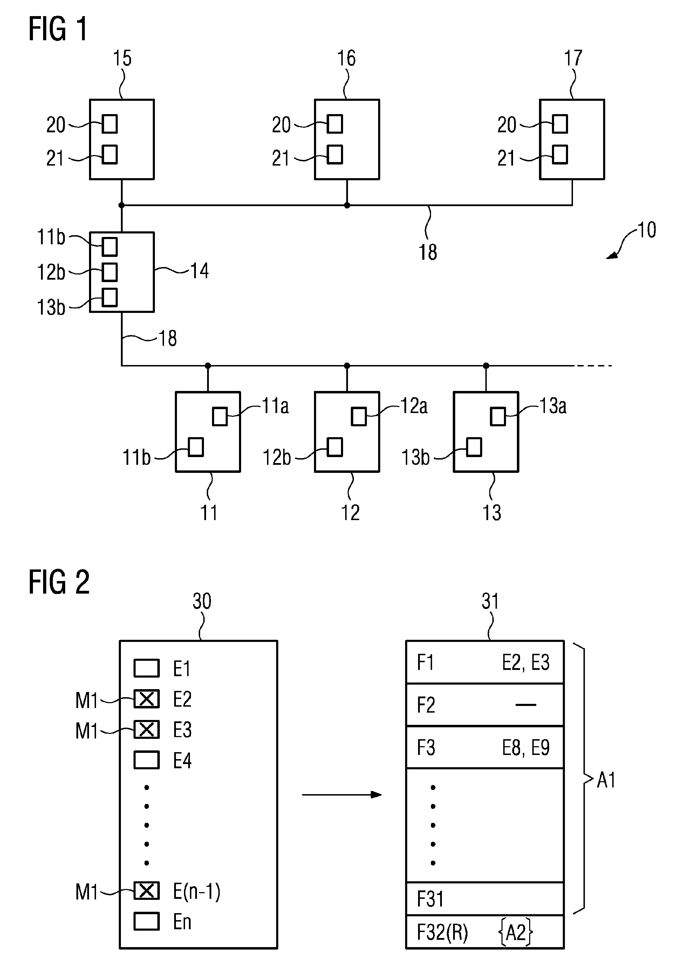

Gemäß der FIG 1 ist eine Automatisierungsanlage 10 mit einer Steuerungseinheit 14, als eine zentrale CPU, beispielsweise einer speicherprogrammierbaren Steuerung, mit einem ersten Feldgerät 11, einem zweiten Feldgerät 12 und einem dritten Feldgerät 13 und einer ersten Bedien- und Beobachtungsstation 15, einer zweiten Bedien- und Beobachtungsstation 16 und einer dritten Bedien- und Beobachtungsstation 17, wobei die vorgenannten Einheiten und Geräte bzw. Stationen über einen Feldbus 18 miteinander verbunden sind, dargestellt. Um ein Verfahren zum Auswerten von Diagnosemeldungen, welche von den Feldgeräten 11, 12, 13 generiert werden können, zu vereinfachen, kommuniziert in einem ersten Schritt ein Inbetriebnahmeprogramm 20 mit einem Feldgerät 11, 12, 13. Im Folgenden sei exemplarisch das erste Feldgerät 11 und die erste Bedien- und Beobachtungsstation 15 herausgegriffen, da die weiteren Feldgeräte und Bedien- und Beobachtungsstationen analog betrieben werden bzw. analog aufgebaut sind.

In der ersten Bedien- und Beobachtungsstation 15, welche beispielsweise als ein HMI-Panel PC ausgestaltet ist, ist neben einem Betriebssystem ein ablauffähiges Inbetriebnahmeprogramm 20 und ein ablauffähiges Visualisierungsprogramm 21 installiert. Ein Anlagenbetreiber kann nun an der ersten Bedien- und Beobachtungsstation 15 das Inbetriebnahmeprogramm 20 starten und das erste Feldgerät 11 hinsichtlich seiner möglichen Diagnoseereignisse abfragen. Dazu nimmt die erste Bedien- und Beobachtungsstation 15 Kontakt über den Feldbus 18 mit dem ersten Feldgerät 11 auf. Diese Kontaktaufnahme wird verfahrensgemäß in einer Abfrage der in dem ersten Feldgerät 11 enthaltenen Diagnoseereignisliste 11a ausgeführt. Das erste Feldgerät 11 übermittelt der ersten Bedien- und Beobachtungsstation 15 den Inhalt der ersten Diagnoseereignisliste 11a, welche dem Anlagenbetreiber auf einem Bildschirm der ersten Bedien- und Beobachtungsstation 15 sichtbar gemacht wird. Diese erste Diagnoseereignisliste 11a ist für das erste Feldgerät 11 spezifisch und enthält alle vom Hersteller des ersten Feldgeräts 11 vorgesehenen Diagnoseereignisse. Das Übermitteln dieser Diagnoseereignisliste 11a stellt den zweiten Schritt 2 des Verfahrens da. In einem dritten Schritt 3 überprüft ein Anlagenbetreiber die derart gesendete Diagnoseereignisliste 11a und entsprechend seiner Vorstellung und der verfahrensgemäß gewünschten Anwendung des ersten Feldgeräts 11 in der Automatisierungsanlage 10 nimmt der Anlagenbetreiber eine Auswahl an Diagnoseereignissen aus der Diagnoseereignisliste 11a vor. In einem vierten Schritt stellt der Anlagenbetreiber die Auswahl als eine erste Auswahlliste 11b auf der ersten Bedien- und Beobachtungsstation 15 mit dem Inbetriebnahmeprogramm 20 bereit und kann diese mit Hilfe der Feldbuskommunikation des Feldbusses 18 als eine neben der ersten Diagnoseereignisliste 11a existierende Auswahlliste 11b auf das erste Feldgerät 11 zurückladen.

Bevor er jedoch das Zurückladen ausführt, wird er den selektierten Diagnoseereignissen der Auswahl einer Fehlerklasse zuordnen. Dabei entsteht aus den Diagnoseereignissen der Auswahl eine erste Menge A1 und für die ausgewählten Diagnoseereignisse entsteht eine zweite Menge A2, wobei den Diagnoseereignissen der zweiten Menge A2 eine Restklasse zugeordnet wird. Für den Fall, dass es 32 mögliche Ereignisklassen gibt, wird zur Absicherung eine Ereignisklasse für "nicht erwartet" reserviert und diese Ereignisklasse wird Restklasse R genannt, welchen die aussortierten Ereignisse zugeordnet werden. So sieht der Anlagenbetreiber später, wenn nicht vorgesehene Ereignisse eintreten.

Durch diese Vorgehensweise ist nun jedem möglichen Ereignis eine bestimmte Fehlerklasse F1...F31 oder F32 für die Restklasse R zugeordnet.

Diese Zuordnung ist gemäß FIG 2 dargestellt.

Ausgehend von einer erfolgreich ausgeführten Zuordnung und einer Abspeicherung der ersten Auswahlliste 11b auf dem ersten Feldgerät 11, wird zusätzlich zu dieser Abspeicherung die erste Auswahlliste 11b auch auf der Steuerungseinheit 14 abgespeichert. Diese zusätzliche Abspeicherung der bereits einmal bereitgestellten ersten Auswahlliste 11b dient bei einem Neuanlauf oder nach einem Austausch des ersten Feldgeräts 11 als ein Nachparametriermechanismus für das erste Feldgerät 11, damit die während der Inbetriebnahmephase durchgeführte Selektion der Diagnoseereignisse nicht wieder erneut durchgeführt werden muss.

Tritt nun in dem ersten Feldgerät 11 ein bestimmtes Diagnoseereignis auf, so ist das Diagnoseereignis einer Klasse F oder R zugeordnet. Durch diese Klassenzuordnung kann ein Auswerten des betreffenden Ereignisses oder ein visualisieren des Ereignisses in der ersten Bedien- und Beobachtungsstation 15 einfacher durchgeführt werden. Es braucht für die Durchführung der Visualisierung bzw. der Auswertung in der ersten Bedien- und Beobachtungsstation 15 nur noch ein bestimmter Filter auf die auszuwertende bestimmte Fehlerklasse F oder R angewendet werden.

Gemäß FIG 2 ist eine Auflistung 30 der Diagnoseereignisliste dargestellt. In einer Listenstruktur sind einzelne Diagnoseereignisse E1, E2, E3...En dargestellt. Durch Ankreuzen der den einzelnen Diagnoseereignissen En vorangestellten Kästchen hat der Anlagenbetreiber die Selektion an Diagnoseereignissen vorgenommen und eine Auswahl M1 getroffen. Die so selektierte Diagnoseereignisliste wird zusätzlich in eine Klassenliste 31 gewandelt und beispielsweise werden der Fehlerklasse F1 die Diagnoseereignisse E2, E3 und der Fehlerklasse F3 die Diagnoseereignisse E8, E9 zugeordnet. Die Klassenliste 31 weist die Fehlerklassen F1...F32 auf, wobei die Fehlerklasse F32 als eine Restklasse R reserviert ist. In diese Resteklasse R werden alle nicht selektierten Diagnoseereignisse als eine zweite Menge A2 eingetragen. Nach der Auswahl durch den Anlagenbetreiber existieren also eine erste Menge A1 und eine mit nicht ausgewählten Diagnoseereignissen gefüllte zweite Menge A2.

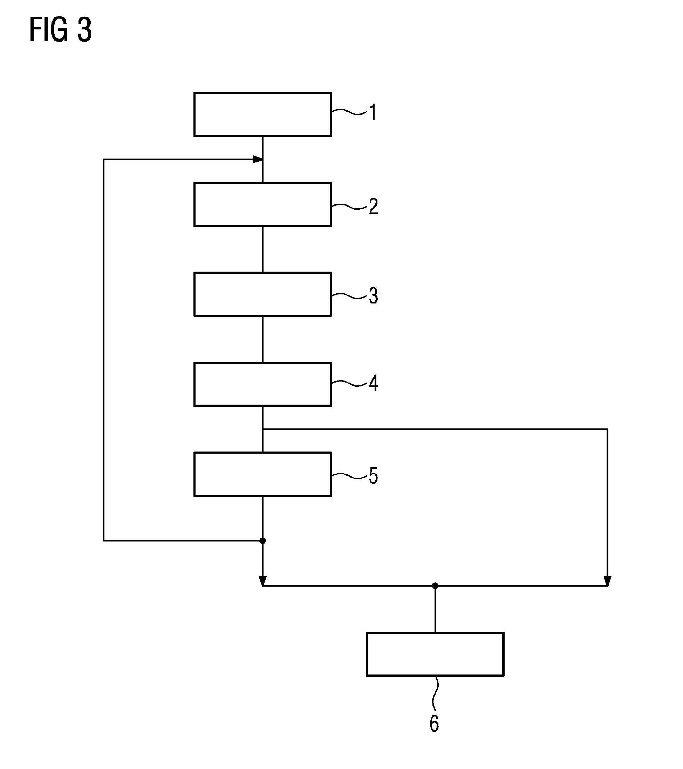

Gemäß FIG 3 sind die Verfahrensschritte in einem Ablaufdiagramm dargestellt. In einem ersten Schritt 1 verbindet sich kommunikationstechnisch ein Inbetriebnahmeprogramm 20 mit einem Feldgerät 11, 12, 13. Durch diese Kommunikation wird dem Inbetriebnahmeprogramm 20 die jeweilige Diagnoseereignisliste 11a, 12a, 13a, in einem zweiten Schritt 2 übermittelt. Nun wird durch den Anlagenbetreiber auf der ersten Bedien- und Beobachtungsstation 15 mit Hilfe des Inbetriebnahmeprogramms 20 in einer interaktiven Sitzung eine Auswahl M1 der gewünschten Diagnoseereignisse durchgeführt. Nach einer Klassenzuordnung, wie in FIG 2 gezeigt, wird diese Auswahl M1 als eine Auswahlliste 11b, 12b, 13b durch das Inbetriebnahmeprogramm 20 in das jeweilige Feldgerät 11, 12, 13 in einem vierten Schritt zurückgeladen.

Auch ist es denkbar, nach Durchführung der Schritte 1 bis 4 aus den so klassifizierten Ereignismeldungen wiederum klassifizierte Sammelmeldungen zu erzeugen. Dies könnte auch in einem interaktiven Schritt in einer Sitzung des Anlagenbetreibers an einem Bedienterminal geschehen. Durch den Richtungspfeil nach dem Schritt 5 zurück zu dem Schritt 2 soll symbolisiert werden, dass das zuvor genannte Verfahren auch wieder zur Erzeugung von Sammelmeldungen durchgeführt werden kann und am Ende wird eine hierarchisch, klassifizierte Information dem Anlagenbetreiber oder dem Anwender der Automatisierungsanlage das Verwalten von Diagnoseereignissen aus einer Vielzahl von Feldgeräten erleichtern.

## Patentansprüche

1. Verfahren zum Auswerten von Diagnosemeldungen, welche durch ein Feldgerät (11, 12, 13) in einer Automatisierungsanlage (10) generiert werden, wobei in einem ersten Schritt (1) ein Inbetriebnahmeprogramm (20) mit dem Feldgerät (11, 12, 13) kommuniziert,
**dadurch gekennzeichnet, dass** für das Feldgerät (11, 12, 13) eine für die Art des Feldgerätes (11, 12, 13) und den Einsatzzweck spezifische Diagnoseereignisliste (11a, 12a, 13a) bereitgestellt wird, und wobei
- in einem zweiten Schritt (2) die Diagnoseereignisliste (11a, 12a, 13a) dem Inbetriebnahmeprogramm (20) übermittelt wird, und
- in einem dritten Schritt (3) ein Anlagenbetreiber die Diagnoseereignisliste (11a, 12a, 13a) überprüft und entsprechend der Anwendung des Feldgerätes (11, 12, 13) in der Automatisierungsanlage (10) eine Auswahl (M1) an Diagnoseereignissen aus der Diagnoseereignisliste (11a, 12a, 13a) auswählt, wobei
- in einem vierten Schritt (4) die Auswahl (M1) als eine Auswahlliste (11b, 12b, 13b) durch das Inbetriebnahmeprogramm (20) in das Feldgerät (11, 12, 13) geladen wird.

2. Verfahren nach Anspruch 2, wobei die Diagnoseereignisse der Auswahl (M) einer Fehlerklasse (F) zugeordnet werden.

3. Verfahren nach Anspruch 1 oder 2, wobei die Diagnoseereignisse der Auswahl (M1) eine erste Menge (A1) und die nicht ausgewählten Diagnoseereignisse eine zweite Menge (A2) bilden, wobei den Diagnoseereignisse der zweiten Menge einer Restklasse (R) zugeordnet werden.

4. Verfahren nach einem der Ansprüche 1 bis 3, wobei nach Generierung eines Diagnoseereignisses auf dem Feldgerät (11, 12, 13) neben dem Ereignis auch die Fehlerklasse (F) oder Restklasse (R) gemeldet wird.

5. Verfahren nach einem der Ansprüche 2 bis 4, wobei das Feldgerät (11, 12, 13) das Diagnoseereignis und die zugeordnete Klasse an eine Auswerteeinheit, insbesondere an eine Bedien- und Beobachtungsstation, übermittelt.

6. Verfahren nach Anspruch 5, wobei in der Auswerteeinheit die Fehlerklasse (F) oder die Restklasse (R) dazu genutzt wird, selektiv die Diagnoseereignisse entsprechend ihrer Klasse auszuwerten und/oder zu visualisieren.

7. Verfahren nach einem der Ansprüche 2 bis 6, wobei die Automatisierungsanlage (10) eine Steuerungseinheit (14), Ein-Ausgabegeräte als Felgeräte und zumindest eine Bedien- und Beobachtungsstation (15, 16 17) umfasst.

8. Verfahren nach einem der Ansprüche 1 bis 7, wobei die Auswahlliste (11b, 12b, 13b) zusätzlich in der Steuerungseinheit (14) abgelegt wird und bei einem Neuanlauf oder nach einem Austausch des Feldgerätes, die Auswahlliste (11b, 12b, 13b) als eine Konfigurationsdatei von der Steuerungseinheit (14) auf das Feldgerät geladen wird.

9. Verfahren nach einem der Ansprüche 1 bis 8, wobei das Inbetriebnahmeprogramm (20) neben einem Visualisierungsprogramm (21) auf einem HMI-Gerät ausgeführt wird.

10. Verfahren nach einem der Ansprüche 2 bis 9, wobei eine Vielzahl von Fehlerklassen (F) gebildet wird und diese Fehlerklassen in eine Abstufung je nach Schweregrad der Diagnoseereignisse priorisiert werden.
